# DEMANDE DE BREVET EUROPEEN

(11) **EP 2 355 586 A1**
(43) Date de publication de la demande: **10.08.2011**
(21) Numéro de dépôt: 10305118.1
(22) Date de dépôt: 04.02.2010
(51) Int. Cl.: H04W 48/14

(54) **Procédé de chargement d'une liste de réseaux préférés dans un élément sécurisé compris dans un terminal mobile**

(71) Demandeur: Gemalto SA, 92190 Meudon (FR)
(72) Inventeur: Kuc, Jean-François, 13112, LA DESTROUSSE (FR); Merrien, Lionel, MONTREAL Québec H4K1Y3 QC (CA)

(57) **Abrégé**

Procédé de chargement d'une liste de réseaux préférés dans un élément sécurisé compris dans un terminal mobile. Le chargement est réalisé lorsque l'élément sécurisé détecte qu'il est en situation d'itinérance dans un réseau de télécommunications. Le procédé consiste à :
i - demander (12) l'ouverture d'un canal IP entre le réseau de télécommunications et l'élément sécurisé, la demande d'ouverture émanant de l'élément sécurisé;
ii - demander (13) le chargement de la liste de réseaux préférés;
iii - télécharger (14) par le canal IP la liste de réseaux préférés dans l'élément sécurisé;
iv - transmettre (16) une requête de l'élément sécurisé vers le terminal mobile d'utiliser l'un desdits réseaux préférés de cette liste.

## Description

Le domaine de l'invention est celui des télécommunications dans des réseaux cellulaires, de type 3G (UMTS) ou LTE (Long Term Evolution en anglais - réseau à évolution à long terme en français).

Plus précisément, la présente invention concerne un procédé de chargement d'une liste de réseaux préférés dans un élément sécurisé tel qu'une carte UICC - Universal Identification Circuit Component en anglais ou composant d'identification personnel en français. Une UICC est un composant renfermant un système d'exploitation de télécommunication pouvant embarquer des applications SIM (Subscriber Identification Module en anglais - carte d'identification d'abonné en français) pour le système GSM, USIM (Universal SIM en anglais - carte SIM universelle an français) pour le système UMTS, ou RUIM (Removable Universal Identification Module en anglais - Module d'identification universel amovible en français) pour le système CDMA.

Une carte UICC est comprise dans un terminal mobile évoluant dans un réseau du type correspondant. Elle peut également être intégrée de manière fixe (c'est-à-dire de manière non amovible) dans le terminal mobile.

Un chargement d'une liste de réseaux préférés dans un élément sécurisé est typiquement réalisé lorsque le terminal est en situation d'itinérance (roaming en anglais).

L'itinérance permet d'utiliser un terminal mobile, par exemple de type GSM et comportant un élément sécurisé constitué par une carte UICC, un peu partout dans le monde sans changer de numéro d'appel. Le principe de l'itinérance repose sur une coopération volontaire entre les opérateurs de réseaux de télécommunication du monde entier, qui signent des accords bilatéraux pour accueillir les clients de l'un sur le réseau de l'autre, et en général réciproquement. Un terminal mobile comprenant un élément sécurisé d'un opérateur donné ne pourra s'inscrire (et par conséquent fonctionner) sur le réseau d'un autre opérateur qu'à la condition qu'un tel accord existe entre les deux.

En pratique, dès qu'un utilisateur d'un terminal mobile met celui-ci sous tension, où que ce soit, le mobile procède à un balayage des canaux des bandes radio qu'il supporte, dressant une liste des opérateurs exploitant les réseaux qu'il détecte. Il tente ensuite prioritairement de s'inscrire sur le dernier réseau qu'il a utilisé (mémorisé dans le fichier LOCI 7F20:6F7E de la carte UICC), ou à défaut sur les réseaux figurant dans la liste des réseaux préférés de la carte (fichier PLMN 7F20:6F30). Il évitera en revanche toute tentative d'inscription sur les réseaux dont les codes MCC-MNC (Mobile Country Code - Mobile Network Code, voir par exemple le site http://fr.wikipedia.org/wiki/International_Mobile_Subscriber_Identity) sont placés dans la liste des réseaux interdits (fichier FPLMN 7F20:6F7B de la carte UICC). Ces réseaux interdits sont ceux avec lequel l'opérateur du réseau auquel s'est abonné l'utilisateur n'a pas signé d'accord d'itinérance.

Lorsqu'un réseau reconnaît l'IMSI (International Mobile Subscriber Identity) d'une carte UICC étrangère, il interroge l'opérateur dont le code MCC-MNC y figure. Si cet IMSI existe dans le HLR (Home Location Register) de cet opérateur, assorti d'un droit d'accès au réseau étranger (accord de roaming en vigueur), alors l'opérateur émetteur de la carte UICC fournit à son partenaire un couple RND - SRES lui permettant de procéder localement à une authentification sans connaître la clé Ki.

Une identité temporaire TMSI est alors attribuée au mobile et remplacera son IMSI lors des futures inscriptions ou localisations : le mobile est désormais reconnu du VLR (Visitor Location Register) de l'opérateur local. Il va donc pouvoir émettre (avec parfois certaines restrictions) des appels en utilisant directement le réseau du pays où il se trouve, lequel va les facturer à l'émetteur de la carte SIM qui va lui-même les porter, en temps réel ou différé, au débit du compte de son client.

Les réseaux figurant dans la liste des réseaux préférés de la carte sont, dans un réseau GSM, soit téléchargés par SMS (via OTA - Over The Air en anglais) dans cette carte ou alors enregistrés lors de l'émission de la carte UICC. Le téléchargement par SMS OTA peut être réalisé dès l'arrivée dans un pays étranger.

Le téléchargement via OTA d'une liste de réseaux préférés dans un élément sécurisé d'un terminal mobile en situation d'itinérance suppose donc la transmission d'un SMS à partir du réseau d'abonné de l'utilisateur, ce SMS étant relayé par le réseau d'itinérance. Or, dans un réseau de quatrième génération, par exemple de type LTE, toutes les communications sont de type IP (Internet Protocol) et il n'existe pas de SMS. Il n'est donc pas possible d'envoyer un SMS à l'élément sécurisé (UICC) lui indiquant cette liste de réseaux préférés.

La présente invention a pour objectif de pallier à cet inconvénient.

Plus précisément, un des objectifs de la présente invention est de fournir un procédé permettant à un terminal mobile dans une situation d'itinérance, comportant un élément sécurisé, et évoluant dans un réseau entièrement IP de type LTE de recevoir une liste de réseaux préférés (et qui seront stockés dans l'élément sécurisé), afin de permettre au terminal mobile de se connecter à l'un de ces réseaux préférés (en général le premier de la liste si celui-ci assure une couverture radio dans la zone où se situe le terminal mobile).

Cet objectif ainsi que d'autres qui apparaîtront par la suite, est atteint grâce à un procédé de chargement d'une liste de réseaux préférés dans un élément sécurisé compris dans un terminal mobile, le chargement étant réalisé lorsque l'élément sécurisé détecte qu'il est en situation d'itinérance dans un réseau de télécommunications. Selon l'invention, le procédé consiste à :
i - demander l'ouverture d'un canal IP entre le réseau de télécommunications et l'élément sécurisé, la demande d'ouverture émanant de l'élément sécurisé ;
ii - demander le chargement de la liste de réseaux préférés ;
iii - télécharger par le canal IP la liste de réseaux préférés dans l'élément sécurisé ;
iv - transmettre une requête de l'élément sécurisé vers le terminal mobile d'utiliser l'un des réseaux préférés de la liste.

Avantageusement, le procédé consiste à fermer le canal IP entre les étapes iii et iv.

Dans un mode de mise en oeuvre préférentiel, l'élément sécurisé est une carte à puce extractible du terminal mobile.

Dans un autre mode de mise en oeuvre préférentiel, l'élément sécurisé fait partie du terminal mobile.

L'invention s'applique dans un réseau de télécommunications de type UMTS ou LTE.

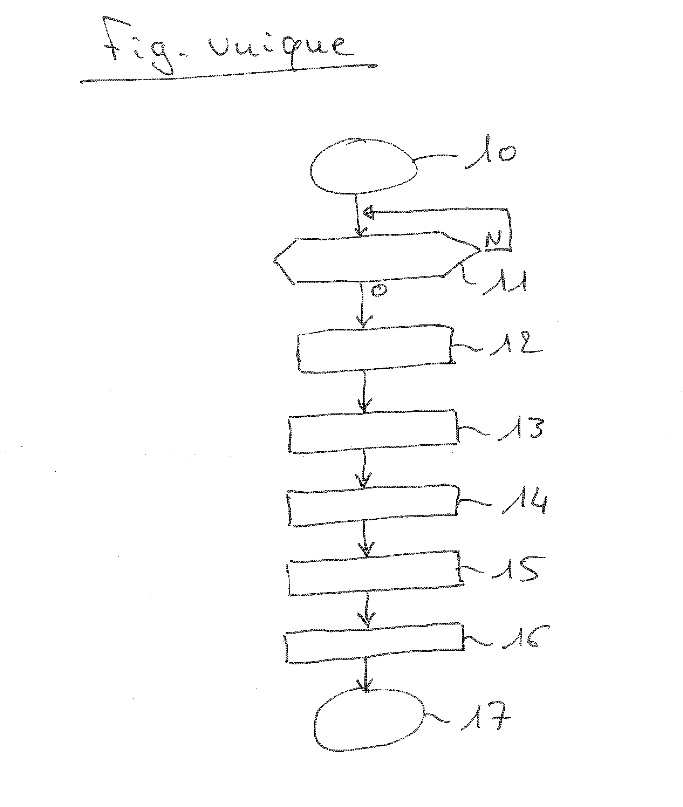

D'autres caractéristiques et avantages de l'invention apparaîtront à la lecture suivante d'un mode de mise en oeuvre avantageux de l'invention, donné à titre illustratif et non limitatif, et de la figure unique annexée représentant les étapes de ce mode de mise en oeuvre avantageux de l'invention.

On se place dans le cadre de la présente invention dans le cadre d'un terminal mobile évoluant dans un réseau de télécommunications de type IP. Ce terminal mobile renferme un élément sécurisé tel qu'une carte UICC telle que mentionnée dans la partie introductive, cette carte pouvant également prendre la forme d'un élément intégré dans le terminal mobile, et donc non extractible. Le terminal mobile considéré est en situation d'itinérance dans le réseau de télécommunications et il est donc nécessaire de lui transmettre par une voie autre que par un SMS une liste de réseaux préférés.

Sur la figure unique, l'étape 10 est une étape de début.

A l'étape 11, l'élément sécurisé vérifie s'il est en situation d'itinérance. Il effectue ce test régulièrement jusqu'à ce qu'il détecte qu'il est effectivement dans cette situation d'itinérance. Après cette détection de situation d'itinérance sur un réseau de type LTE (4G) ou UMTS (3G), l'élément sécurisé demande, lors d'une étape 12, l'ouverture d'un canal IP entre le réseau de télécommunications et lui-même. Cette demande est transmise au réseau par le biais du terminal mobile. Comme l'UICC ne peut pas avoir d'adresse IP fixe, c'est l'UICC qui fait la demande d'ouverture du canal IP. Le réseau lui alloue alors une adresse IP. Un canal de communication IP est ainsi ouvert entre le réseau et l'élément sécurisé à la fin de l'étape 12.

Lors d'une étape 13, l'élément sécurisé demande au réseau un chargement de la liste des réseaux préférés de son opérateur d'origine. Cette liste comprend les réseaux des opérateurs avec lequel l'opérateur d'origine a passé des accords d'itinérance.

A réception de cette demande, le réseau auquel s'est rattaché le terminal mobile télécharge, lors d'une étape 14 et par le canal IP ouvert, la liste des réseaux préférés dans l'élément sécurisé.

Lors d'une étape facultative 15, le canal IP est fermé, soit à l'initiative de l'élément sécurisé, soit à l'initiative du réseau une fois que celui-ci se soit assuré que le téléchargement de la liste des réseaux préférés dans l'élément sécurisé s'est correctement passé.

Lors d'une étape 16, l'élément sécurisé transmet vers le terminal mobile une requête pour que celui-ci utilise la nouvelle liste de réseaux préférés et que celui-ci se connecte sur le réseau préféré du pays visité.

A la suite de cette étape 16, le terminal mobile est donc rattaché à l'un des réseaux préférés de son opérateur d'origine.

L'étape 17 est une étape de fin.

Si l'étape facultative 15 n'est pas mise en oeuvre, le canal IP n'est pas fermé. La procédure qui consiste lors de l'étape 16 à demander au terminal d'utiliser le réseau préféré va alors fermer le canal IP. En fait l'élément sécurisé va demander au terminal de recommencer sa phase d'initialisation.

Le réseau de télécommunications dans lequel s'applique la présente invention est un réseau UMTS ou LTE. Dans le cas d'un réseau UMTS, les SMS existent et l'invention vise à fournir une alternative à l'utilisation de SMS pour la transmission de listes de réseaux préférés. Dans le cas d'un réseau LTE, seuls des canaux IP peuvent être ouverts pour des communications entre un élément sécurisé et le réseau.

## Revendications

1. Procédé de chargement d'une liste de réseaux préférés dans un élément sécurisé compris dans un terminal mobile, ledit chargement étant réalisé lorsque ledit élément sécurisé détecte (11) qu'il est en situation d'itinérance dans un réseau de télécommunications, **caractérisé en ce qu'**il consiste à :
i - demander (12) l'ouverture d'un canal IP entre ledit réseau de télécommunications et ledit élément sécurisé, ladite demande d'ouverture émanant dudit élément sécurisé ;
ii - demander (13) le chargement de ladite liste de réseaux préférés ;
iii - télécharger (14) par ledit canal IP ladite liste de réseaux préférés dans ledit élément sécurisé ;
iv - transmettre (16) une requête dudit élément sécurisé vers ledit terminal mobile d'utiliser l'un desdits réseaux préférés de ladite liste.

2. Procédé selon la revendication 1, **caractérisé en ce qu'**il consiste à fermer (15) ledit canal IP entre les étapes iii et iv.

3. Procédé selon l'une des revendications 1 et 2, **caractérisé en ce que** ledit élément sécurisé est une carte à puce extractible dudit terminal mobile.

4. Procédé selon l'une des revendications 1 et 2, **caractérisé en ce que** ledit élément sécurisé fait partie dudit terminal mobile.

5. Procédé selon l'une des revendications 1 à 4, **caractérisé en ce que** ledit réseau de télécommunications est un réseau UMTS.

6. Procédé selon l'une des revendications 1 à 5, **caractérisé en ce que** ledit réseau de télécommunications est un réseau LTE.
